Europäisches Patentamt

European Patent Office

Office européen des brevets

(11) Veröffentlichungsnummer: **0 122 440**
**B1**

# EUROPÄISCHE PATENTSCHRIFT

(45) Veröffentlichungstag der Patentschrift :
28.05.86

(51) Int. Cl.⁴ : **F 24 D   3/10, F 16 J   3/02**

(21) Anmeldenummer : **84102548.9**

(22) Anmeldetag : **09.03.84**

(54) **Volumenveränderlicher Behälter insbesondere für den Einsatz als Ausgleichsbehälter in Gebäudeheizungssystemen.**

(30) Priorität : 16.04.83 DE 3313853

(43) Veröffentlichungstag der Anmeldung :
24.10.84 Patentblatt 84/43

(45) Bekanntmachung des Hinweises auf die Patenterteilung : 28.05.86 Patentblatt 86/22

(84) Benannte Vertragsstaaten :
**AT BE CH DE FR IT LI SE**

(56) Entgegenhaltungen :
**EP-A- 0 080 824**
**FR-A- 1 560 477**
**US-A- 1 819 987**
**US-A- 4 090 286**

(73) Patentinhaber : **Continental Gummi-Werke Aktiengesellschaft**
**Königsworther Platz 1**
**D-3000 Hannover 1 (DE)**

(72) Erfinder : **Hoheisel, Peter, Ing. grad.**
**Vivaldistrasse 7**
**D-3410 Northeim (DE)**
Erfinder : **Bartholmei, Peter, Dr., Dipl.-Chem.**
**Neustädter Ring 9a**
**D-3410 Northeim (DE)**

## Beschreibung

Die Erfindung bezieht sich auch volumenveränderliche Behälter, die in Form von flachen Blasen aus jeweils zwei aufeinandergelegten und an ihren Randkanten dichtend miteinander verbundenen biegsamen Gummi- oder Kunststoffplatten hergestellt sind, insbesondere für den Einsatz als Ausgleichsbehälter in Gebäudeheizungssystemen. Ein derartiger Behälter ist aus der FR-A-1 560 477 bekannt.

Es war bisher üblich, zum Herstellen solcher Behälter die eine mit Übermaß zugeschnittene Platte um die Randkante der anderen Platte herumzuschlagen und auf diese in einer überlappenden Verbindung niederzufalten, wonach die umlaufende Kontaktzone durch Verkleben oder Zusammenvulkanisieren fixiert wurde. Trotz der scheinbaren Einfachheit des Verfahrens war damit aber doch ein vergleichsweise hoher Arbeitsaufwand verbunden, wobei die stets vorhandene Gefahr örtlich sich ausbildender Verbindungsfehler einen nicht zu vermeidenden Ausschußanteil begründete. Zudem zeigten sich diese Art Randverbindungen den ständigen wechselnden Knick- und Biegebeanspruchungen im Gebrauch der Behälter nicht in dem erwünschten Maße gewachsen: denn unabhängig von der Beschaffenheit der Haftzone traten gerade in dem Krümmungsbogen der überlappenden größeren Platte überraschend immer wieder Kerbrisse auf, die durch späteren Ermüdungsbruch zu vorzeitigem Ausfall der betroffenen Behälter führten.

Der Erfindung liegt demgegenüber als Aufgabe zugrunde, durch eine neuartige Gestaltung des Verbindungsbereiches eine vereinfachte Herstellung blasenförmiger volumenveränderlicher Behälter unter weitgehendem Ausschluß sonst immanenter Fehlerquellen zu ermöglichen und darüber hinaus die Standzeit und Gebrauchstüchtigkeit der Behälter wesentlich zu steigern. Zum Lösen dieser Aufgabe ist, ausgehend von Behältern der eingangs geschilderten Gattung, gemäß der Erfindung vorgesehen, daß die lose aufeinanderliegenden flächengleichen Behälterplatten von einer mit U-förmigem Querschnitt mit einander parallelen Schenkeln aus Gummi oder gummiähnlichem Kunststoff hergestellten Randleiste unter haftender Bindung der Schenkelinnenflächen auf den Randzonen der Plattenaußenflächen über den Behälterumfang durchlaufend eingefaßt sind, wobei nach weiteren Teilmerkmalen der Erfindung der die beiden Schenkel untereinander verbindende Krümmungsbogen der Randleiste mit Abstand von den gegeneinander beweglichen Außenkanten der Platten um diese herumgeführt ist und die freien Schenkelenden lippenartig nach den Plattenoberflächen hin zugeschärft sind. Die Schichtdicke zumindest der Leistenschenkel ist zweckmäßig in einer der Plattenstärke entsprechenden Größenordnung bemessen, während demgegenüber der Krümmungsbogen auch mit einer im Vergleich zu den Schenkeln größeren Schichtdicke, beispielsweise mit einer auf seiner Innenfläche angeformten wulstartigen Querschnittsverdickung ausgebildet sein kann, um der Bruchanfälligkeit gerade in diesem kritischen Bereich der Verbindung mit erhöhter Sicherheit zu begegnen.

Die Erfindung ersetzt die gebräuchliche Überlappungsverbindung der Behälterplatten durch eine einfache Laschenverbindung. Trotz der als zusätzliches Laschenelement hierfür benötigten Randleiste konnte der Gesamtarbeitsaufwand bis zum Herstellen der stoffschlüssigen Verbindung entgegen den ursprünglichen Erwartungen bedeutend gesenkt werden. Die unabhängig von den Behälterplatten und parallel dazu in wirtschaftlicher Weise in großen Längen stranggepreßten Randleisten werden nach Bedarf einem vorab angelegten Vorrat entnommen und an Ort und Stelle auf die gewünschten Abmessungen zugeschnitten. Die Voraussetzung gleicher Flächengröße der beiden Behälterplatten erweist sich dabei als besonderer Vorteil, da sie einmal die vorbereitenden Fertigungsschritte auf das Zuschneiden einer einzigen Plattengröße reduziert und zum anderen hierfür von einer einheitlichen Rohlingsware ohne größeren Verschnittabfall ausgehen kann.

Im Gebrauch der Behälter bildet die die Plattenkanten übergreifende äußere Randleiste ein Biegegelenk, das infolge seiner von vornherein gekrümmten Bogen- oder Bügelform die mit dem Spreizen der Platten aufgezwungenen Winkelbewegungen leichter und mit wesentlich niedrigeren Spannungswerten ausführt, als es mit einer vergleichbaren Überlappungsverbindung der unmittelbar aufeinanderliegenden Plattenränder der Fall ist. Die sonst die Gebrauchsdauer der Behälter begrenzende Wirkung der Plattenrandverbindung ist damit grundlegend aufgehoben.

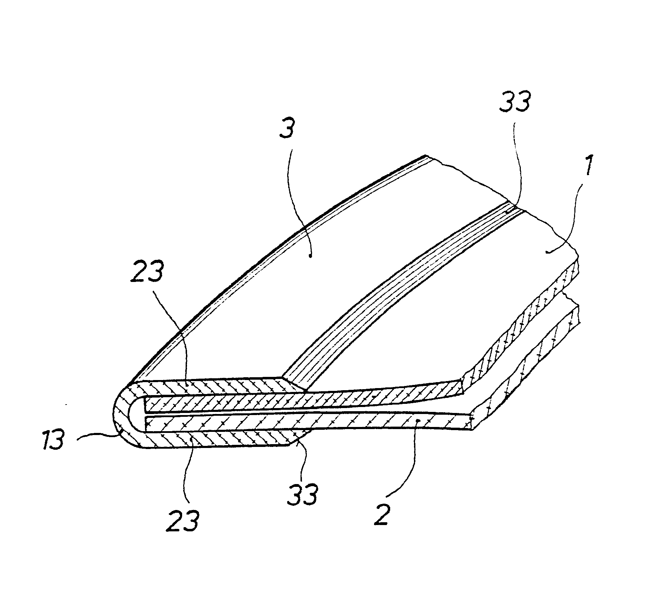

Die Erfindung ist anhand der schematischen Darstellung eines Ausführungsbeispieles in der Zeichnung verdeutlicht. Die einzige Figur der Zeichnung zeigt einen Querschnitt durch den Randkantenbereich eines neuartigen Behälters.

Der gezeichnete Behälter ist in Form einer volumenveränderlichen Blase aus zwei biegsamen Gummiplatten 1, 2 aufgebaut. Die die Behälterwandungen bildenden Platten 1, 2 sind mit gleicher Flächengröße und kongruenter Grundform aus einer einheitlichen Gummibahn gleichmäßiger Schichtdicke ohne Verstärkungseinlagen zugeschnitten oder ausgestanzt und in unmittelbarer Aufeinanderlage durch eine auf ihre Randkanten aufgeschobene Randleiste 3 am Umfang miteinander vereinigt. Die ebenfalls aus Gummi vorteilhaft durch Strangpressen hergestellte Randleiste 3 ist in dem gezeichneten spannungsfreien Ursprungszustand von U-förmigem Querschnitt mit über einen Krümmungsbogen 13 untereinander verbundenen parallelen Schenkeln 23. In dem gezeichneten Ausführungsbeispiel weist sie in allen Teilen etwa die gleiche Schichtdicke wie auch die Platten 1, 2 auf. Abweichend davon könnte aber auch der Krümmungsbogen 13 mit größerer Wandstärke, beispielsweise mit einer an der Innenfläche angeformten Querschnittsverdickung ausgebildet sein, wenn dies aus Festigkeitsgründen angezeigt sein sollte. Die freien Enden der Leistenschenkel 23 laufen nach den Plattenoberflächen hin mit einer lippenartigen Fase oder Zuschärfung 33 aus.

Die Randleiste 3 ist mittels eines Klebers haftend mit den zugekehrten Platten 1, 2 in ihren überdeckten Randzonen verbunden. Da die Platten selbst direkt nicht miteinander verhaftet und auch in dem Randbereich gegeneinander beweglich sind, werden alle aus den Verformungen der Behälterwandungen aufgegebenen Spreiz- oder Winkelbewegungen ausschließlich über den Krümmungsbogen 13 der Randleiste übertragen. Ein günstigerer Bewegungsablauf ergibt sich dabei, wenn die Härteeinstellung der Randleiste 3 höher als die der Platten 1, 2 gewählt wird.

## Patentansprüche

1. Volumenveränderlicher Behälter, der in Form einer flachen Blase aus zwei aufeinandergelegten und an ihren Randkanten dichtend miteinander verbundenen biegsamen Gummi- oder Kunststoffplatten (1, 2) hergestellt ist, insbesondere für den Einsatz als Ausgleichsbehälter in Gebäudeheizungssystemen, dadurch gekennzeichnet, daß die lose aufeinanderliegenden flächengleichen Behälterplatten (1, 2) von einer mit U-förmigem Querschnitt mit einander parallelen Schenkeln (23) aus Gummi oder gummiähnlichem Kunststoff hergestellten Randleiste (3) unter haftender Bindung der Schenkelinnenflächen auf den Plattenaußenflächen über den Behälterumfang durchlaufend eingefaßt sind.

2. Behälter nach Anspruch 1, dadurch gekennzeichnet, daß die Schichtdicke zumindest der Schenkel (23) der Randleiste (3) in einer der Plattenstärke entsprechenden Größenordnung bemessen ist.

3. Behälter nach den Ansprüchen 1 und 2, dadurch gekennzeichnet, daß die freien Schenkelenden (33) der Randleiste (3) lippenartig nach den Plattenoberflächen hin zugeschärft sind.

4. Behälter nach den Ansprüchen 1 bis 3, dadurch gekennzeichnet, daß der die beiden Schenkel (23) untereinander verbindende Krümmungsbogen (13) der Randleiste (3) mit Abstand von den gegeneinander beweglichen Außenkanten der Platten (1, 2) um diese herumgeführt ist.

5. Behälter nach den Ansprüchen 1 bis 4, dadurch gekennzeichnet, daß der Krümmungsbogen (13) der Randleiste (3) mit im Vergleich zu den Schenkeln (23) größerer Schichtdicke ausgebildet ist.

6. Behälter nach Anspruch 5, dadurch gekennzeichnet, daß der Krümmungsbogen (13) der Randleiste (3) mit einer auf seiner Innenfläche angeformten wulstartigen Querschnittsverdickung ausgebildet ist.

7. Behälter nach den Ansprüchen 1 bis 6, dadurch gekennzeichnet, daß die Randleiste (3) aus einer dem Gummi oder Kunststoff der Platten (1, 2) gleichen oder gleichartigen Werkstoff aber im Vergleich dazu höherer Härte hergestellt ist.

## Claims

1. Container with a variable content, which is produced in the form of a flat bubble from two flexible rubber or plastics plates (1, 2) which are laid one on top of the other and are sealingly interconnected at their edge regions, especially for use as an expansion tank in a heating system for a building, characterised in that the container plates (1, 2) which lie one on top of the other in a loose manner and have identical areas, are bordered by an edge strip (3) which extends continuously over the circumference of the container, said strip being produced from rubber or rubberlike plastics material and having a U-shaped cross section formed by flanges (23) which extend parallel to one another, the inner faces of the flanges being mounted with a tight fit on the outer faces of the plates.

2. Container according to claim 1, characterised in that the layer thickness of at least the flanges (23) of the edge strip (3) is of an order of magnitude corresponding to the thickness of the plates.

3. Container according to claims 1 and 2, characterised in that the free flange ends (33) of the edge strip (3) are bevelled in the form of a lip towards the plate surfaces.

4. Container according to claims 1 to 3, characterised in that the curved portion (13) of the edge strip (3) joins the two flanges (23) together and extends around the plates (1, 2) with a spacing from the outer edges of said plates which are displaceable relative to one another.

5. Container according to claims 1 to 4, characterised in that the curved portion (13) of the edge strip (3) has a greater layer thickness than the flanges (23).

6. Container according to claim 5, characterised in that the curved portion (13) of the edge strip (3) is provided with a thickened, bead-like cross-sectional region which is integrally moulded with its inner face.

7. Container according to claims 1 to 6, characterised in that the edge strip (3) is produced from a material which is identical or similar to the rubber or plastics material used for the plates (1, 2), but such material is harder than that used for said plates.

## Revendications

1. Réservoir à volume variable, fabriqué, sous forme d'une bulle plate, à partir de deux plaques de caoutchouc ou de plastique (1, 2) posées l'une sur l'autre et réunies l'une à l'autre de façon étanche par leurs bordures, en particulier pour emploi comme réservoir de compensation dans les systèmes de chauffage des bâtiments, caractérisé en ce que l'on encadre en continu, le long de la périphérie du réservoir, les plaques du réservoir (1, 2), de même surface et posées, non tendues, l'une sur l'autre, par un bandeau de bordure (3) à section en U, à ailes (23) parallèles l'une à l'autre et fabriqué en caoutchouc ou en un plastique semblable au caoutchouc, en faisant adhérer les surfaces intérieures des ailes sur les surfaces extérieures des plaques.

2. Réservoir selon la revendication 1, caractérisé en ce que l'épaisseur d'au moins l'aile (23) du bandeau de bordure (3) est d'un ordre de grandeur correspondant à celle des plaques.

3. Réservoir selon les revendications 1 et 2, caractérisé en ce que les extrémités libres des ailes (33) du bandeau de bordure (3) sont chanfreinées, à la façon de lèvres, en allant vers les surfaces des plaques.

4. Réservoir selon la revendication 1 à 3, caractérisé en ce que l'arc en courbe (13) du bandeau de bordure (3), qui relie entre elles les deux ailes (23) les contourne à une certaine distance des bords extérieurs, mobiles l'un par rapport à l'autre, des plaques (1, 2).

5. Réservoir selon la revendication 1 à 4, caractérisé en ce que l'arc en courbe (13) du bandeau de bordure (3) est prévu avec une épaisseur supérieure à celle des ailes (23).

6. Réservoir selon la revendication 5, caractérisé en ce que l'arc en courbe (13) du bandeau de bordure (23) est prévu avec, en coupe, une surépaisseur du type bourrelet venue de forme sur sa surface intérieure.

7. Réservoir selon les revendications 1 à 6, caractérisé en ce que le bandeau de bordure (3) est fabriqué en un matériau identique ou semblable au caoutchouc ou au plastique des plaques (1, 2), mais d'une dureté comparativement plus élevée.